# EUROPÄISCHE PATENTSCHRIFT

(11) **EP 2 284 405 B1**
(45) Veröffentlichungstag und Bekanntmachung des Hinweises auf die Patenterteilung: **31.08.2016**
(21) Anmeldenummer: 10170628.1
(22) Anmeldetag: 23.07.2010
(51) Int. Cl.: F16B 13/14, F16B 39/22

(54) **Befestigungsanordnung**
Fixing arrangement
Agencement de fixation

(30) Priorität: 14.08.2009 DE 102009028545
(43) Veröffentlichungstag der Anmeldung: 16.02.2011
(73) Patentinhaber: HILTI Aktiengesellschaft, 9494 Schaan (LI)
(72) Erfinder: Glogger, Josef, 86807, Buchloe (DE); Ginter, Herbert, 87656, Germaringen (DE); Bohn, Uwe, 86438, Kissing (DE)
(74) Vertreter: Hilti Aktiengesellschaft Corporate Intellectual Property

(56) Entgegenhaltungen:
- EP-A2- 1 101 956
- WO-A1-98/55772
- DE-A1- 10 311 471
- FR-A1- 2 852 613
- US-A- 4 094 054

## Beschreibung

Die Erfindung betrifft eine Befestigungsanordnung mit einer Befestigungsvorrichtung, die ein Befestigungselement und eine Verankerungshülse zur Verankerung eines Befestigungselementes in einem Bohrloch eines Bauteils mittels einer aushärtbaren Masse, der im Oberbegriff des Patentanspruchs 1 genannten Art aufweist, wobei die Befestigungsvorrichtung mittels der aushärtbaren Masse in einem Bohrloch eines Bauteils verankert ist.

Um Anbauteile an einem Bauteil, wie Fundamente, Wände, Decken oder dergleichen, z. B. aus einem mineralischen Material, wie Beton, Mauerwerk oder dergleichen, zu befestigen, ist es aus der US 5,628,161 bekannt, ein Befestigungselement in einem zuvor im Bauteil erstellten Bohrloch mittels einer aushärtbaren Masse zu verankern.

Für eine sichere Verankerung des Befestigungselementes muss das Bohrloch vor dem Einbringen der aushärtbaren Masse aufwändig mit zusätzlichen Vorrichtungen gereinigt werden. Weiter sind derartige Befestigungsvorrichtungen in Zugzonen des Bauteils ungeeignet, da diese kein Nachspreizverhalten aufweisen.

Um die vorgenannten Nachteile zu überwinden, ist z. B. aus der EP 0 426 951 B1 eine Ankerstange als Befestigungselement bekannt, die einen Schaft mit mehreren axial hintereinander angeordneten Erweiterungen aufweist, wobei die Erweiterungen jeweils konusartig ausgebildet sind und deren Durchmesser jeweils zu dem in Setzrichtung vorderen Ende der Ankerstange zunimmt. Aufgrund der Konenflächen an der Ankerstange und der Gegenkonenflächen, welche die ausgehärtete Masse ausbildet, werden unter Belastung der Ankerstange die auf diese wirkenden Normalkräfte in radial wirkende Spreizkräfte umgewandelt, so dass diese Befestigungsanordnung nachspreizen kann und somit auch in der Zugzone eines Bauteils anordbar ist.

Nachteilig an der bekannten Lösung ist, dass diese Ankerstange als ein Spezialelement aufwändig und teuer in der Herstellung ist und andererseits nur unter definierten Randbedingungen, z. B. in Bezug auf die Einbindetiefe oder Anbauteildicke, angewendet werden kann.

Für eine verbesserte Verankerung eines beispielsweise als Stangenware zur Verfügung stehenden Befestigungselementes, wie z. B. eine Gewindestange oder ein Bewehrungseisen, in einem Bohrloch eines Bauteils mittels einer aushärtbaren Masse ist aus der EP 0 738 835 B1 eine siebartige Verankerungshülse bekannt. Diese Verankerungshülse weist einen hülsenförmigen Grundkörper mit einem ersten Ende, mit einem dem ersten Ende gegenüberliegenden zweiten Ende sowie mit mehreren axial hintereinander, zwischen den Enden angeordneten Erweiterungsabschnitten auf.

Nachteilig an dieser bekannten Lösung ist, dass eine derartig geschaffene Befestigungsanordnung kein Nachspreizverhalten aufweist und somit nicht in einer Zugzone eines Bauteils angeordnet werden kann.

Aus der FR 2 852 613 A1 ist ein Verfahren zur Reparatur einer Verankerung einer Eisenbahnschiene auf einer Holzschwelle bekannt. Bei dem Verfahren wird nach dem Herausziehen der Schwellenschraube eine Einlage in Form einer Hülse in das Loch in der Holzschwelle eingeführt, eine aushärtbare Masse eingebracht und die Schwellenschraube derart wieder eingeschraubt, dass die Einlage zwischen die Schwellenschraube und die Wandung des Loches gepresst wird. Die Einlage ermöglicht es nun, eine Wandung wiederherzustellen, in die das Gewinde der Schwellenschraube eindringen kann und gewährleistet dadurch einen festen Sitz der Eisenbahnschiene auf der Schwelle.

Nachteilig an dieser bekannten Lösung ist, dass eine derartig geschaffene Befestigungsanordnung kein Nachspreizverhalten aufweist und somit nicht in einer Zugzone eines Bauteils angeordnet werden kann.

Aus der US 4,094,054 A ist ein Verfahren zur Befestigung von Gegenständen an einer vorzugsweisen aus Hohlkammerbausteinen bestehenden Wand mittels Dübel, die mit einer Innenbohrung zum Eindrehen einer Befestigungsschraube versehen sind, wobei der an seinem dem Einführungsende entgegengesetzten Ende mit einem als Abdichtung des Bohrlochrandes dienenden Flansch versehene Dübel bis zu diesem Flansch in das vorbereitete Bohrloch eingesetzt wird, bekannt. Eine Zementmischung wird zur Ausfüllung des den Dübel umgebenden Hohlraumes vorgeschlagen.

Aufgabe der Erfindung ist es, einerseits eine einfach herstellbare Verankerungshülse zu schaffen, welche die vorgenannten Nachteile nicht aufweist. Ferner soll eine chemisch verankerbare Befestigungsvorrichtung mit einem Befestigungselement und mit einer Verankerungshülse sowie eine Befestigungsanordnung mit einer derartigen Befestigungsvorrichtung geschaffen werden, die in einer Zugzone eines Bauteils angeordnet werden kann.

Die Aufgabe ist für eine Befestigungsanordnung durch die Merkmale des unabhängigen Anspruchs gelöst. Vorteilhafte Weiterbildungen sind in den Unteransprüchen dargelegt.

Die erfindungsgemässe Befestigungsanordnung umfasst ein Befestigungselement, ein Bauteil mit einem Bohrloch, eine aushärtbare Masse und eine Verankerungshülse zur Verankerung des Befestigungselements in dem Bohrloch des Bauteils mittels der aushärtbaren Masse, wobei die Verankerungshülse einen hülsenförmigen Grundkörper mit einem ersten Ende, mit einem dem ersten Ende gegenüberliegenden zweiten Ende sowie mit mehreren axial hintereinander, zwischen den Enden angeordneten Erweiterungsabschnitten aufweist, wobei die Erweiterungsabschnitte jeweils konusartig ausgebildet sind und deren Durchmesser jeweils in Richtung des ersten Endes zunimmt, dadurch gekennzeichnet, dass die Befestigungsanordnung derart gestaltet ist, dass Konenflächen in der aushärtbaren Masse ausgebildet sind, und derart, dass die Verankerungshülse eine Trenn- und Gleitebene zwischen von der aushärtbaren Masse innerhalb der Verankerungshülse gebildeten Innenkonen und außerhalb der Verankerungshülse gebildeten Außenkonen bildet, wobei die Trenn- und Gleitebene ein Gleiten der Innen- und Außenkonen ermöglicht, so dass durch das Gleiten ein Nachspreizverhalten der Befestigungsanordnung gewährleistet ist.

Diese Befestigungsanordnung ist einfach herstellbar und kann auch in einer Zugzone eines Bauteils angeordnet werden. Aufgrund des vorteilhaften Nachspreizverhaltens der Befestigungsanordnung unter Belastung des Befestigungselementes ist eine aufwändige separate Reinigung des Bohrlochs vor dem Setzen der Befestigungsvorrichtung beziehungsweise vor dem Setzen der Verankerungshülse nicht mehr erforderlich. Trotzdem werden hohe Endlasten der verankerten Befestigungsvorrichtung erreicht.

Durch den Wegfall der heute geforderten Reinigungsschritte (z: B. Ausblasen, Ausbürsten und erneutes Ausblasen des Bohrloches) wird die Anwendungssicherheit erhöht und das Setzen der Befestigungsvorrichtung deutlich beschleunigt. Es werden keine zusätzlichen Reinigungsgeräte zum Setzen der Befestigungsvorrichtung benötigt und die Umgebungsluft und damit der Anwender werden nicht mehr durch ausgeblasenes Bohrmehl bzw. Reinigungsstaubes zusätzlich belastet. Gemäss der Erfindung sind die Erweiterungsabschnitte der Verankerungshülse jeweils konusartig ausgebildet und deren Durchmesser nimmt jeweils in Richtung des ersten Endes zu.

Die vorteilhaft formstabile Verankerungshülse sorgt einerseits dafür, dass Konenflächen in der ausgehärteten Masse ausgebildet werden und bildet andererseits gleichzeitig eine Trennebene beziehungsweise Gleitebene zwischen den von der aushärtbaren Masse innerhalb der Verankerungshülse gebildeten Innenkonen und den ausserhalb der Verankerungshülse gebildeten Aussenkonen aus. Die innerhalb der Verankerungshülse ausgehärtete Masse ist mit der Aussenseite des Befestigungselementes verbunden. An das Befestigungselement werden keine besonderen Anforderungen gestellt, womit z. B. auch eine Gewindestange als Stangenmaterial als Befestigungselement verwendet werden kann. Das Befestigungselement wie auch die Verankerungshülse sind nach Wunsch beziehungsweise aufgrund der örtlichen Gegebenheiten entsprechend ablängbar. Eine auf ein gesetztes Befestigungselement wirkende Normalkraft wird durch die geschaffene Konenausgestaltung in im Wesentlichen radial wirkende Spreizkräfte umgeleitet.

Mit einer derartigen Verankerungshülse können Befestigungsvorrichtungen wie auch Befestigungsanordnungen kostengünstig geschaffen werden, welche flexibel in der Anwendung und zudem zugzonentauglich sind. Des Weiteren entfällt mit einer derartigen Verankerungshülse eine aufwändige Reinigung des zuvor erstellten Bohrlochs, da die Kraftumleitung unter Last Spreizkräfte im Untergrund erzeugt und somit eine Haftung der aushärtbaren Masse an der Bohrlochwandung für eine sichere Verankerung der Befestigungsvorrichtung im Bohrloch nicht mehr zwingend erforderlich ist.

Vorteilhaft ist die Verankerungshülse aus einem Kunststoff z. B. in einem Spritz-/Gussverfahren, in einem Blasverfahren oder einem Tiefziehverfahren von Folien gefertigt, womit die Verankerungshülse einfach herstellbar ist. Alternativ ist die Verankerungshülse aus einem metallischen Werkstoff z. B. in einem Stanz-/Biegeverfahren oder Überdruckverfahren gefertigt. Vorteilhaft wird die Verankerungshülse dem Anwender als ein einteiliges Element zur Verfügung gestellt, wobei die Verankerungshülse einteilig oder mehrteilig ausgebildet sein kann. Bei einer Verankerungshülse aus mehreren Teilen, sind diese vorteilhaft über Verbindungselemente, z. B. Schnappelemente, miteinander zu der Verankerungshülse verbindbar.

Neben einer im Querschnitt kreisrunden Ausgestaltung der Verankerungshülse kann diese auch im Querschnitt eine ovale oder polygonale Ausgestaltung aufweisen, womit Freiräume beziehungsweise Kanäle für einen vorteilhaften Fluss der aushärtbaren Masse zwischen der Wandung des Bohrlochs und der Verankerungshülse (äusserer Massenfluss) als auch zwischen dem Befestigungselement und der Verankerungshülse (innerer Massenfluss) geschaffen werden. Bei einer von einem Kreisquerschnitt ausgehenden Ausgestaltung des Querschnitts der Verankerungshülse sind die Freiräume beziehungsweise Kanäle für den Massen- bzw. Mörtelfluss vorteilhaft von Erweiterungsabschnitt zu Erweiterungsabschnitt radial versetzt zueinander angeordnet.

Vorzugsweise verlaufen die Erweiterungsabschnitte schraubenlinienförmig entlang des hülsenförmigen Grundkörpers der Verankerungshülse, womit ein vorteilhafter Fluss der aushärtbaren Masse im Raum zwischen der Verankerungshülse und der Wandung des Bohrlochs in Richtung des Bohrlochmundes gewährleistet ist. Vorteilhaft entspricht die Steigung der schraubenlinienförmig verlaufenden Erweiterungsabschnitte dem 0.2-fachen bis 1.0-fachen, besonders vorteilhaft dem 0.4-fachen bis 0.6-fachen, des Aussendurchmessers des Grundkörpers der Verankerungshülse.

Vorteilhaft verlaufen die Erweiterungsabschnitte auch innenseitig der Verankerungshülse schraubenlinienförmig, womit ein vorteilhafter Fluss der aushärtbaren Masse innerhalb der Verankerungshülse im Raum zwischen der Verankerungshülse und des Befestigungselementes in Richtung des Bohrlochmundes gewährleistet ist.

Bevorzugt beträgt der Konenwinkel zumindest eines Erweiterungsabschnittes in Bezug auf eine Längsachse der Verankerungshülse zumindest 10°. Vorteilhaft ist dieser Konenwinkel nicht grösser als 40° ausgebildet. Besonders vorteilhaft liegt dieser Konenwinkel zwischen 20° und 30°, womit ein vorteilhaftes Nachspreizverhalten einer Befestigungsanordnung mit einer derartigen Verankerungshülse gewährleistet ist. Ein grösserer Konenwinkel führt zu geringen radial wirkenden Spreizkräften, was sich insbesondere am Rand eines Bauteils und bei Bauteilen mit einer geringen Bauteildicke vorteilhaft positiv auswirkt.

Vorzugsweise ist zumindest eine Durchtrittsöffnung für die aushärtbare Masse am hülsenförmigen Grundkörper vorgesehen, durch welche die aushärtbare Masse beim Setzvorgang aus beziehungsweise in die Verankerungshülse fliessen kann. Mit der zumindest einen Durchtrittsöffnung werden beim Setzen der Verankerungshülse Lufteinschlüsse vermieden. Vorteilhaft ist die zumindest eine Durchtrittsöffnung im Bereich des ersten Endes des hülsenförmigen Grundkörpers vorgesehen, so dass diese im gesetzten Zustand der Verankerungshülse im Bereich des Bohrlochgrunds zu liegen kommt. Weiter vorteilhaft sind mehrere kleinere Öffnungen am Grundkörper der Verankerungshülse vorgesehen, welche ein Fliessen der aushärtbaren Masse innerhalb der Verankerungshülse in den Raum ausserhalb der Verankerungshülse beziehungsweise umgekehrt ermöglichen, dabei aber für ein vorteilhaftes Nachspreizverhalten der Befestigungsanordnung mit einer derartigen Verankerungshülse das Gleiten der Innen- und Aussenkonen nicht behindern. Neben zumindest einer im Wesentlichen radial ausgerichteten Durchtrittsöffnung kann diese auch in axialer Richtung offen und zwischen zwei Erweiterungsabschnitten vorgesehen sein. Sind mehrere Durchtrittsöffnungen an einem hülsenförmigen Grundkörper vorgesehen, sind diese vorteilhaft radial zueinander beabstandet angeordnet.

Bevorzugt ist der hülsenförmige Grundkörper am ersten Ende zumindest teilweise verschlossen, so dass dieses Ende einen Anschlag beziehungsweise ein Mitnahmeabschnitt für ein in die Verankerungshülse eingeführtes Befestigungselement bildet. Diese Ausgestaltung der Verankerungshülse ist dann besonders vorteilhaft, wenn beispielsweise nach einer Befüllung des erstellten Bohrlochs mit der aushärtbaren Masse die Verankerungshülse mit dem Befestigungselement gleichzeitig beziehungsweise von dem Befestigungselement in das Bohrloch eingeführt wird.

Vorzugsweise ist der hülsenförmige Grundkörper mit einer definierten Menge der aushärtbaren Masse befüllt, womit der Anwender nur eine Einheit auf der Baustelle handhaben muss.

Bevorzugt ist die Verankerungshülse an dem Befestigungselement festgelegt, womit diese zumindest bis zum Setzen der Befestigungsvorrichtung unverlierbar an dem Befestigungselement gehalten ist. Vorteilhaft ist der minimale Innendurchmesser der Verankerungshülse kleiner als der Aussendurchmesser des Befestigungselementes, womit die Verankerungshülse einfach an dem Befestigungselement festlegbar ist. Weiter vorteilhaft ist das Befestigungselement an seiner Aussenseite mit einer Profilierung, z. B. mit einem Aussengewinde versehen, welche einerseits einen vorteilhaften Verbund mit der ausgehärteten Masse sicherstellt und andererseits bei einer zumindest bereichsweise Anlage an der Innenseite der Verankerungshülse eine einfache Festlegung derselben am Befestigungselement ermöglicht.

Die Erfindung wird nachstehend anhand von Ausführungsbeispielen näher erläutert. Es zeigen:
Fig.1 1 Ein erstes Ausführungsbeispiel einer erfindungsgemäß verwendbaren Verankerungshülse;
Fig. 2 eine Befestigungsanordnung mit einem zweiten Ausführungsbeispiel einer erfindungsgemäß verwendbaren Verankerungshülse; und
Fig. 3 ein Detailschnitt durch die Befestigungsanordnung gem. Fig. 2.

Grundsätzlich sind in den Figuren gleiche Teile mit den gleichen Bezugszeichen versehen.

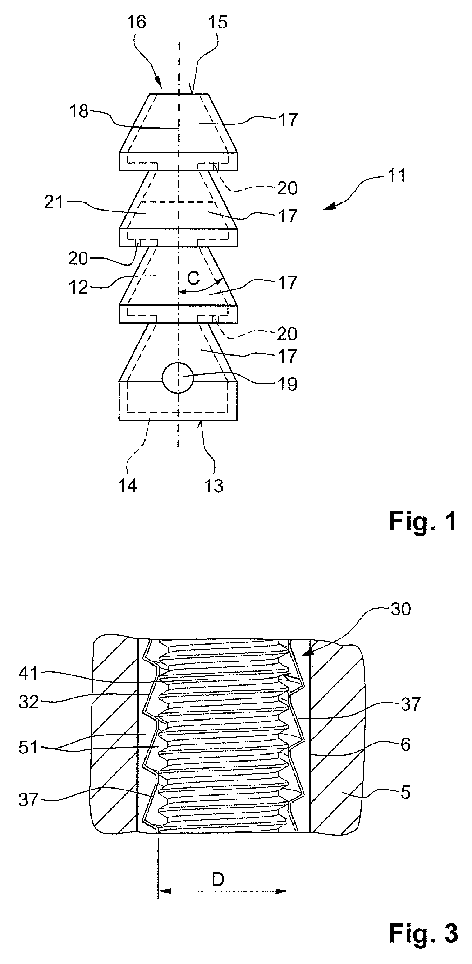

Die in der Figur 1 dargestellte Verankerungshülse 11 zur Verankerung eines Befestigungselementes in einem Bohrloch eines Bauteils mittels einer aushärtbaren Masse weist einen hülsenförmigen Grundkörper 12 auf. Der hülsenförmige Grundkörper 12 weist ein erstes Ende 13 mit einem Bodenabschnitt 14, der den hülsenförmigen Grundkörper 12 im Bereich des ersten Endes 13 verschliesst, und ein dem ersten Ende 13 gegenüberliegendes zweites Ende 15 auf, das mit einer Einführöffnung 16 für das Befestigungselement versehen ist.

Weiter weist der hülsenförmige Grundkörper 12 mehrere axial hintereinander zwischen den Enden 13 und 15 angeordnete Erweiterungsabschnitte 17 auf, die jeweils konusartig ausgebildet sind und deren Durchmesser jeweils in Richtung des ersten Endes 13 zunimmt. Der Konenwinkel C der Erweiterungsabschnitte beträgt in Bezug auf eine Längsachse 18 der Verankerungshülse 11 zumindest 10°. In diesem Ausführungsbeispiel weist jeder Erweiterungsabschnitt 17 den gleichen Konenwinkel C von 25° auf.

Im Bereich des ersten Endes 13 ist am Grundkörper 12 eine Durchtrittsöffnung 19 für die aushärtbare Masse 21 vorgesehen. Weiter sind Durchtrittsöffnung 20 für die aushärtbare Masse 21 zwischen den Erweiterungsabschnitten 17 vorgesehen, welche in diesem Ausführungsbeispiel alternierend in Bezug auf einen Umfang des Grundkörpers 12 angeordnet sind.

Der hülsenförmige Grundkörper 12 ist mit einer definierten Menge der aushärtbaren Masse befüllt und steht dem Anwender als eine Einheit zur Verfügung. Anstelle einer werksseitigen Befüllung der Verankerungshülse 11 kann diese auch vor Ort z. B. durch den Anwender selbst mit der aushärtbaren Masse beispielsweise vor oder nach dem Einführen der Verankerungshülse 11 in das Bohrloch befüllt werden.

Zur Schaffung einer Befestigungsanordnung wird die Verankerungshülse 11 mit ihrem ersten Ende 13 voran in ein Bohrloch eingeführt.

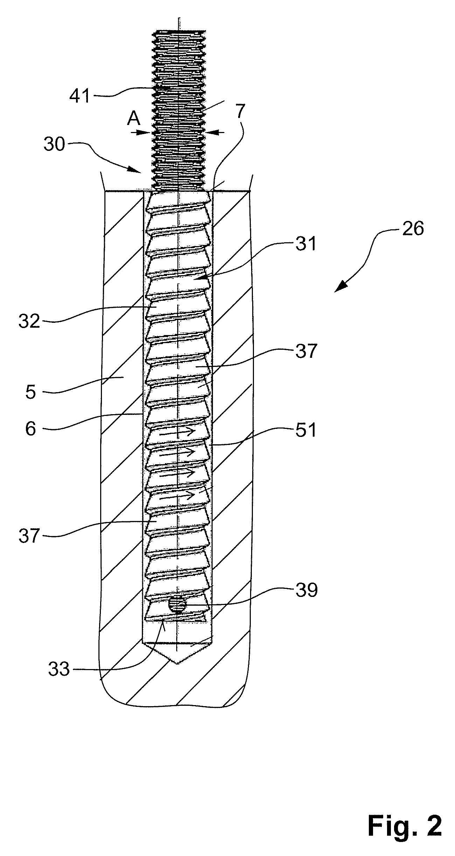

In den Figuren 2 und 3 ist eine Befestigungsanordnung 26 gezeigt, die ein Befestigungselement 41 und eine Verankerungshülse 31 aufweist, die mittels einer aushärtbaren Masse 51 in einem Bohrloch 6 eines Bauteils 5 verankert sind und die eine Befestigungsvorrichtung 30 ausbilden.

Die konenförmigen Erweiterungsabschnitte 37, deren Durchmesser sich in Richtung des ersten Endes 33 des hülsenförmigen Grundkörpers 32 erweitert, verlaufen schraubenlinienförmig entlang des hülsenförmigen Grundkörpers 32. Im Bereich des ersten Endes 33 ist am Grundkörper 32 eine Durchtrittsöffnung 39 für die aushärtbare Masse 51 vorgesehen.

Zur Festlegung der Verankerungshülse 31 an dem Befestigungselement 41 weist dessen hülsenförmige Grundkörpers 32 einen minimalen Innendurchmesser D auf, der zumindest partiell etwas kleiner als der Aussendurchmesser A des Befestigungselementes 41 ist.

Zuerst wird ein Bohrloch 6 mit der erforderlichen Tiefe im Bauteil 5 erstellt. Anschliessend wird das Bohrloch 5 mit einer entsprechenden Menge der aushärtbaren Masse 51 befüllt und dann die Befestigungsvorrichtung 30 mit dem ersten Ende 33 der Verankerungshülse 31 voran in das Bohrloch 5 eingeführt. Dabei dringt einerseits aushärtbare Masse 51 in das Innere den inneren Raum zwischen den dem hülsenförmigen Grundkörper 32 der Verankerungshülse 31 und dem Befestigungselement 41 ein und andererseits wird die aushärtbare Masse 51 im Spalt Raum zwischen der Verankerungshülse 31 und der Wandung des Bohrlochs 6 in Richtung des Bohrlochmundes 7 verdrängt. Durch die schraubenlinienförmige Ausgestaltung der konenförmigen Erweiterungsabschnitte 37 wird innerhalb wie auch ausserhalb der Verankerungshülse 31 ein optimaler Fluss der aushärtbaren Masse 51 in Richtung des Bohrlochmundes 7 gewährleistet. Nach dem Aushärten der aushärtbaren Masse 51 ist die Befestigungsvorrichtung 30 auf das maximale Lastniveau belastbar.

In alternativen Verfahren wird die Verankerungshülse 11 oder 31 zuerst und separat von dem Befestigungselement 41 in das erstellte Bohrloch 6 und dann anschliessend das Befestigungselement 41 in die entsprechende Verankerungshülse 11 oder 31 eingeführt. Dabei kann das Bohrloch 6 vor dem Einführen der entsprechenden Verankerungshülse 11 oder 31, mit der aushärtbaren Masse 51 befüllt werden. Die aushärtbare Masse kann alternativ auch nach dem Einführen der entsprechenden Verankerungshülse 11 oder 31 in das Bohrloch 6 in die Verankerungshülse 11 oder 31 eingebracht werden. In einer weiteren, nicht abschliessenden Variante wird erst nach dem Einführen des Befestigungselementes 41 in die entsprechende Verankerungshülse 11 oder 31 die aushärtbare Masse 51 eingefüllt bzw. eingebracht werden.

## Patentansprüche

1. Befestigungsanordnung mit einem Befestigungselement (41), einem Bauteil (5) mit einem Bohrloch (6), einer aushärtbaren Masse (21, 51) und einer Verankerungshülse (11) zur Verankerung des Befestigungselementes (41) in dem Bohrloch (6) des Bauteils (5) mittels der aushärtbaren Masse (21; 51), wobei die Verankerungshülse (11; 31) einen hülsenförmigen Grundkörper (12; 32) mit einem ersten Ende (13; 33), mit einem dem ersten Ende (13; 33) gegenüberliegenden zweiten Ende (15) sowie mit mehreren axial hintereinander, zwischen den Enden (13, 15; 33) angeordneten Erweiterungsabschnitten (17; 37) aufweist, wobei die Erweiterungsabschnitte (17; 37) jeweils konusartig ausgebildet sind und deren Durchmesser jeweils in Richtung des ersten Endes (13; 33) zunimmt, **dadurch gekennzeichnet, dass** die Befestigungsanordnung derart gestaltet ist,
- dass Konenflächen in der aushärtbaren Masse ausgebildet sind, und derart,
- dass die Verankerungshülse eine Trenn- und Gleitebene zwischen von der aushärtbaren Masse innerhalb der Verankerungshülse gebildeten Innenkonen und außerhalb der Verankerungshülse gebildeten Außenkonen bildet, wobei die Trenn- und Gleitebene ein Gleiten der Innen- und Außenkonen ermöglicht, so dass durch das Gleiten ein Nachspreizverhalten der Befestigungsanordnung gewährleistet ist.

2. Befestigungsanordnung nach Anspruch 1, **dadurch gekennzeichnet, dass** die Erweiterungsabschnitte (37) schraubenlinienförmig entlang des hülsenförmigen Grundkörpers (32) verlaufen.

3. Befestigungsanordnung nach Anspruch 1 oder 2, **dadurch gekennzeichnet, dass** der Konenwinkel (C) zumindest eines Erweiterungsabschnittes (17) in Bezug auf eine Längsachse (18) der Verankerungshülse (11) zumindest 10° beträgt.

4. Befestigungsanordnung nach einem der Ansprüche 1 bis 3, **dadurch gekennzeichnet, dass** zumindest eine Durchtrittsöffnung (19, 20; 39) für die aushärtbare Masse (21; 51) am hülsenförmigen Grundkörper (12; 32), optional im Bereich des ersten Endes (13, 15; 33), vorgesehen ist.

5. Befestigungsanordnung nach einem der Ansprüche 1 bis 4, **dadurch gekennzeichnet, dass** der hülsenförmige Grundkörper (12) am ersten Ende (13) zumindest teilweise verschlossen ist.

6. Befestigungsanordnung nach einem der Ansprüche 1 bis 5, **dadurch gekennzeichnet, dass** der hülsenförmige Grundkörper (12) mit einer definierten Menge der aushärtbaren Masse (21) befüllt ist.

7. Befestigungsanordnung nach einem der vorhergehenden Ansprüche, **dadurch gekennzeichnet, dass** die Verankerungshülse (31) an dem Befestigungselement (41) festgelegt ist.

8. Befestigungsanordnung nach einem der vorhergehenden Ansprüche, **dadurch gekennzeichnet, dass** die innerhalb der Verankerungshülse ausgehärtete Masse mit der Außenseite des Befestigungselements verbunden ist.

## Claims

1. Fixing arrangement with a fixing element (41), a component (5) with a drill hole (6), a mass that may be hardened (21, 51) and an anchoring sleeve (11) for anchoring the fixing element (41) in the drill hole (6) of the component (5) by means of the mass that may be hardened (21; 51), in which the anchoring sleeve (11; 31) has a sleeve shaped base body (12; 32) with a first end (13; 33), with a second end (15) opposite the first end (13; 33) and with several extension sections (17; 37) arranged axially behind each other between the ends (13, 15; 33), in which the extension sections (17; 37) are made cone-like and their diameter increases in the direction of the first end (13; 33), **characterised in that** the fixing arrangement is made in such a way
- that cone areas are made in the mass that may be hardened and in such a way
- that the anchoring sleeve forms a parting and sliding plane between inner cones made inside the anchoring sleeve from the mass that may be hardened and outer cones made outside the anchoring sleeve, in which the parting and sliding plane allows sliding of the inner and outer cones so that post-expansion behaviour of the fixing arrangement is ensured through sliding.

2. Fixing arrangement according to claim 1, **characterised in that** the expansion sections (37) run helically along the sleeve shaped base body (32).

3. Fixing arrangement according to claim 1 or 2, **characterised in that** the cone angle (C) of at least one extension section (17) with reference to a longitudinal axis (18) of the anchoring sleeve (11) amounts to at least 10°.

4. Fixing arrangement according to one of claims 1 to 3, **characterised in that** at least one opening (19, 20; 39) for the mass that may be hardened (21; 51) is provided on the sleeve shaped base body (12; 32), optionally in the area of the first end (13, 15; 33).

5. Fixing arrangement according to one of claims 1 to 4, **characterised in that** the sleeve shaped base body (12) is at least partly closed at the first end (13).

6. Fixing arrangement according to one of claims 1 to 5, **characterised in that** the sleeve shaped base body (12) is filled with a defined amount of mass that may be hardened (21).

7. Fixing arrangement according to one of the previous claims, **characterised in that** the anchoring sleeve (31) is fixed to the fixing element (41).

8. Fixing arrangement according to one of the previous claims, **characterised in that** the mass that may be hardened inside the anchoring sleeve is connected

## Revendications

1. Ensemble de fixation comportant un élément de fixation (41), un composant (5) ayant un trou de perçage (6), une matière durcissable (21, 51) et une douille d'ancrage (11) pour ancrer l'élément de fixation (41) dans le trou de perçage (6) du composant (5) au moyen de la matière durcissable (21, 51), dans lequel la douille d'ancrage (11 ; 31) comporte un corps principal en forme de douille (12 ; 32) ayant une première extrémité (13 ; 33), une seconde extrémité (15) opposée à la première extrémité (13 ; 33) ainsi que plusieurs parties d'extension (17 ; 37) agencées axialement les unes derrière les autres, entre les extrémités (13, 15 ; 33), dans lequel les parties d'extension (17 ; 37) sont respectivement formées de manière conique et dont le diamètre augmente respectivement en direction de la première extrémité (13 ; 33), **caractérisé en ce que** l'ensemble de fixation est conçu de telle sorte
- que des surfaces coniques sont formées dans la matière durcissable, et de telle sorte
- que la douille d'ancrage forme un plan de séparation et de glissement entre des cônes intérieurs formés par la matière durcissable à l'intérieur de la douille d'ancrage et des cônes extérieurs formés à l'extérieur de la douille d'ancrage, dans lequel le plan de séparation et de glissement permet un glissement des cônes intérieurs et extérieurs de telle sorte que le glissement assure un écartement de l'ensemble de fixation.

2. Ensemble de fixation selon la revendication 1, **caractérisé en ce que** les parties d'extension (37) s'étendent de manière hélicoïdale le long du corps principal en forme de douille (32).

3. Ensemble de fixation selon la revendication 1 ou 2, **caractérisé en ce que** l'angle conique (C) d'au moins une partie d'extension (17) est d'au moins 10° par rapport à un axe longitudinal (18) de la douille d'ancrage (11).

4. Ensemble de fixation selon l'une des revendications 1 à 3, **caractérisé en ce qu'**au moins une ouverture traversante (19, 20 ; 39) pour la matière durcissable (21 ; 51) est prévue sur le corps principal en forme de douille (12 ; 32), facultativement dans la zone de la première extrémité (13, 15 ; 33).

5. Ensemble de fixation selon l'une des revendications 1 à 4, **caractérisé en ce que** le corps principal en forme de douille (12) est au moins partiellement fermé à la première extrémité (13).

6. Ensemble de fixation selon l'une des revendications 1 à 5, **caractérisé en ce que** le corps principal en forme de douille (12) est rempli avec une quantité définie de la matière durcissable (21).

7. Ensemble de fixation selon l'une des revendications précédentes, **caractérisé en ce que** la douille d'ancrage (31) est bloquée sur l'élément de fixation (41).

8. Ensemble de fixation selon l'une des revendications précédentes, **caractérisé en ce que** la matière durcie à l'intérieur de la douille d'ancrage est liée au côté extérieur de l'élément de fixation.
